# FASCICULE DE BREVET EUROPEEN

(11) **EP 2 989 174 B1**
(45) Date de publication et mention de la délivrance du brevet: **18.11.2020**
(21) Numéro de dépôt: 14720561.1
(22) Date de dépôt: 24.04.2014
(51) Int. Cl.: C09K 3/32, E02B 15/04, C02F 1/40

(54) **PROCÉDÉ POUR LA MISE EN FORME SOLIDE D'HYDROCARBURES ET DE CORPS GRAS LIQUIDES, DISPOSITIFS POUR LA MISE EN OEUVRE DE CE PROCÉDÉ ET LA FABRICATION D'UNE COMPOSITION, ET LEUR UTILISATION POUR LA DEPOLLUTION**
VERFAHREN ZUR ÜBERFÜHRUNG VON KOHLENWASSERSTOFFEN UND FLÜSSIGEN FETTKÖRPERN IN DIE FESTE FORM, VORRICHTUNGEN FÜR DIE UMSETZUNG DIESES VERFAHRENS SOWIE HERSTELLUNG EINER ZUSAMMENSETZUNG, UND IHRE ANWENDUNG FÜR DIE SCHADSTOFFREINIGUNG
METHOD FOR SOLIDIFYING LIQUID FATS AND HYDROCARBONS, DEVICES FOR IMPLEMENTING SAID METHOD AND PRODUCING A COMPOSITION, AND USE THEREOF FOR POLLUTION CONTROL

(30) Priorité: 24.04.2013 EP 13305537
(43) Date de publication de la demande: 02.03.2016
(73) Titulaire: Calude SARL, 1470 Luxembourg (LU)
(72) Inventeur: CHIARAMELLO, Jean-Marc, F-06100 Nice (FR); BERTRAND, Claude, 83460 Taradeau (FR)
(74) Mandataire: Lavoix
(86) Numéro de dépôt international: PCT/EP2014/058296
(87) Numéro de publication internationale: WO 2014/173988

(56) Documents cités:
- AU-A- 3 354 778
- DE-A1- 4 012 638
- DE-U1-202005 010 806
- US-A- 4 222 868
- US-A- 5 049 002
- US-A- 5 112 495
- US-A1- 2012 018 385

## Description

La présente invention concerne un procédé permettant de mettre en forme solide des liquides tels que des hydrocarbures ou des corps gras, notamment lorsqu'ils sont répandus sur des surfaces solides ou aqueuses, ainsi que des dispositifs pour sa mise en œuvre.

On a déjà proposé divers moyens de dépollution pour ces déversements, et notamment des moyens de confinement et de ramassage. En raison de la forme liquide de ces polluants, on a également déjà proposé des moyens destinés à les solidifier pour faciliter leur ramassage.

On a déjà proposé d'absorber ces polluants liquides par des produits absorbants. Par exemple le brevet EP-A-1341620, se propose d'absorber ces polluants liquides par des produits absorbants .On a proposé d'absorber les hydrocarbures, y compris sur des sites aquatiques, par des préparations déshydratées de tourbes et toutes sortes d'absorbants ont déjà été envisagés.

Tous ces produits sont volumineux et difficiles à répandre sur les sites pollués. Sur des surfaces aquatiques ils peuvent s'hydrater et finir par entrainer au fond l'agglomérat de polluants.

Selon une autre voie, on a déjà proposé de solidifier des hydrocarbures par des agents chimiques polymérisants ou gélifiants. Ainsi le brevet FR-A-2806939 propose de solidifier des hydrocarbures liquides par l'utilisation de produits chimiques tels que des peroxydes. D'autres agents sont envisagés, par exemple dans le brevet FR-A-1026092 pour une solidification par gélification. En fait une pluralité de tels agents polymérisants ou gélifiants a été proposée. Beaucoup ont l'inconvénient d'être des particules solides.

Dans les brevets DE-A-4012638, US-5112495 et AU-78/33547 on a également déjà proposé de solidifier des hydrocarbures en déversant sur la couche d'hydrocarbure de la cires à bougies ou de la paraffine chauffées, puis en recueillant le mélange solidifié, duquel la cire ou paraffine peut ensuite être éventuellement séparée pour être recyclée. Ces produits sont cependant eux même polluants, notamment pour les animaux aquatiques.

Dans le brevet US-5049002 il a été suggéré de retirer des produits pétroliers d'un environnement aqueux en déversant, sur le produit à retirer, une matière grasse, telle que du beurre ou des graisses à pâtisser, à l'état fondu, pour aboutir à une prise en masse solide. La durée de solidification est très longue et très sensible à la température de l'eau. De plus une proportion importante du produit pétrolier n'est pas récupérée.

Une étude importante des propriétés de nombreux agents solidifiants a été publiée par Ghalambor, A. 1997. The effectiveness of solidifiers for combatting oil spills, Louisiana Applied Oil Spill Research and Development Program, OSRADP Technical Report Series 96-006. Elle conclut à une grande inconstance des résultats, sans parler des inconvénients dus à la nature chimique des solidifiants, dans un cadre naturel.

L'obtention, l'acheminement et la mise en oeuvre de ces produits chimiques posent de nombreux problèmes, sans parler des risques de pollution résiduelle provenant de ces produits eux-mêmes.

La présente invention se propose de remédier à ces inconvénients et de fournir un procédé et une composition permettant de solidifier instantanément, et au besoin sur de grandes surfaces, des nappes d'hydrocarbures ou de corps gras, et d'une façon qui permette un enlèvement facile, notamment pour le traitement de surfaces polluées. Elle se propose également de permettre de traiter même de très grandes surfaces, y compris des surfaces maritimes, avec des quantités comparativement très faibles de cette composition. Elle permet de procéder à ces traitements de manière écologique. Elle permet également de séparer ensuite le polluant d'avec le matériau de la composition, puis de réutiliser ce dernier.

L'invention a pour objet un procédé de dépollution d'un site, par mise en forme solide d'hydrocarbures ou de corps gras, qui sont liquide à température ambiante, et qui sont en nappe sur le site, la nappe d'hydrocarbures ou de corps gras liquides formant une matière à solidifier, caractérisée en ce que l'on chauffe une composition comprenant, au moins en proportion majoritaire en volume par rapport à la composition totale, du suif de bovin ou d'ovin, et optionnellement, un agent fluidifiant, à une température d'au moins 45°C notamment de 45 à 55°C pour que la composition soit à l'état liquide. On met en contact la composition avec la matière à solidifier, en déversant la composition sur la matière à solidifier alors que ladite composition est à l'état liquide, pour ainsi obtenir un matériau complexe solide contenant les hydrocarbures ou corps gras de la matière à solidifier. On recueille ce matériau complexe solide.

Dans un mode de mise en oeuvre particulièrement préféré, on procède, immédiatement avant ladite mise en contact, à une étape de préparation de la matière à solidifier améliorant la distribution de ladite composition dans la matière.

Cette étape comporte, de préférence, une aspersion par un acide, notamment un acide organique à chaîne courte, de préférence l'acide citrique, ou l'acide acétique. Les autres acides usuels peuvent cependant aussi être utilisés, tels que par exemple l'acide sulfurique.

De préférence l'acide est utilisé aux concentrations usuelles dans le commerce.

Le débit d'acide est faible, comparé au débit de composition. De préférence le volume d'acide déversé est inférieur ou égal à 10 %, du volume total de composition utilisée, et plus préférentiellement à 5 %, par exemple de l'ordre de 2 à 4 %.

Dans un autre mode de mise en oeuvre cette étape peut comporter l'envoi d'un jet de gaz comprimé, notamment d'air comprimé sur la matière à solidifier. De préférence on utilise des jets d'air comprimé très fins. Dans un autre mode de mise en œuvre, encore, cette étape peut comporter une dissociation mécanique, par exemple en utilisant des lames ou autres moyens mécaniques se déplaçant dans ladite matière. Ces autres modes de mise en oeuvre peuvent aussi être associés au déversement d'acide.

Cette étape de préparation de la matière à mettre sous une forme solide peut être avantageusement mise en oeuvre dans une zone à courte distance devant la zone de mise en contact de la matière avec la composition sous forme liquide, par rapport au sens de déplacement relatif entre la matière, par exemple une nappe d'hydrocarbures, et les moyens de mise en contact. De préférence la distance entre les deux zones est de 5 cm à 1 m, plus préférentiellement entre 15 et 50 cm.

De façon avantageuse l'état liquide de ladite composition peut être obtenu par chauffage du suif solide à ou au-dessus de sa température de fusion supérieure à la température ambiante, ou bien par chauffage de la composition elle-même, de préférence à une température d'au moins 45°C, par exemple entre 48 et 55°C, voire plus, par exemple 60 et 80°C.

On décrit également une telle composition et son utilisation pour la mise en forme solide d'hydrocarbures ou de corps gras sous forme sensiblement liquide, notamment pour la dépollution de surfaces ou de sites pollués par ces hydrocarbures ou corps gras, comprenant, au moins en proportion majoritaire, du suif, et optionnellement, un agent fluidifiant.

Dans une forme de réalisation, ladite composition peut être mélangée à une quantité d'hydrocarbure ou corps gras, par exemple provenant d'une pollution, cette quantité pouvant, de plus, assurer la fonction d'agent lubrifiant, en plus, ou à la place d'un agent lubrifiant spécifique, la proportion d'hydrocarbure ou corps gras dans le mélange ne dépassant pas une valeur qui empêcherait le suif, dans le mélange rendu liquide, de solidifier une quantité supplémentaire d'hydrocarbure ou corps gras sur laquelle le mélange liquide est déversé.

Le suif est obtenu par la fonte de la graisse de bovins, notamment le bœuf, ou d'ovins, notamment le mouton. La température de fusion du suif est de l'ordre de 48 à 50 °C.

Un tel matériau solide à température ambiante, qui forme la totalité, ou la majorité de la composition, est totalement et rapidement biodégradable, dans chacun des environnements où la composition est mise en œuvre.

Par proportion majoritaire on entend une proportion en volume, par rapport à la composition totale d'au moins 50 %, de préférence d'au moins 75 %, et plus préférentiellement d'au moins 90 %, voire 100% en l'absence d'agent fluidifiant.

L'agent fluidifiant, optionnellement présent dans la composition, a pour rôle d'ajuster la fluidité de la composition pour faciliter, si nécessaire, son écoulement lors de la mise en contact avec la matière à mettre à l'état solide.

Cet agent peut être un surfactant usuel, par exemple un polysorbate ou Tween. Mais on préfère utiliser une huile, de préférence une huile minérale. Il peut d'ailleurs s'agir d'une huile polluante, par exemple de l'huile de vidange, car elle sera entièrement solidifiée et ramassée par le procédé selon l'invention.

La proportion de cet agent, notamment d'une huile, est de préférence inférieure ou égale à 5 % en poids, et plus préférentiellement de l'ordre de 1 à 2 %, voire moins.

La composition peut éventuellement comporter une quantité minoritaire d'un matériau, notamment pour augmenter la densité de la composition, éventuellement sous forme de particules solides, par exemple de la limaille de fer, mais on préfère qu'elle comporte essentiellement du suif. La présence de limaille de fer peut faciliter la récupération du matériau complexe obtenu après traitement, par exemple en mettant en œuvre des aimants ou électro-aimants.

Pour fabriquer la composition on peut chauffer ses composants, s'il y en a plusieurs, au-dessus de la température de fusion dudit suif et mélanger les éventuels autres composants, mais on peut aussi se contenter de chauffer seulement ledit suif, pour le rendre liquide, et ajouter l'éventuel autre composant non chauffé, dès lors que la température du suif est suffisante pour maintenir l'ensemble de la composition dans son état liquide.

Si l'agent fluidifiant est présent, il peut être chauffé ou non et mélangé audit matériau rendu liquide.

Cette fabrication peut avoir lieu avant l'utilisation de la composition pour la mise en œuvre du procédé selon l'invention, auquel cas on conserve la composition à la température élevée, de préférence sous agitation.

Cependant on peut aussi fabriquer la composition chaude pratiquement au moment de son utilisation.

Par hydrocarbures au sens de la présente invention on entend, seuls ou en mélanges, les hydrocarbures aliphatiques et/ou aromatiques, saturés ou insaturés, liquides à température ambiante, et notamment, de manière non limitative, les pétroles bruts ou crudes, les condensats ou pentane plus, les résidus d'hydrocarbures, les pétroles extra-lourds ou syncrudes fluides, les fuel-oils ou huiles minérales, les pétroles raffinés, carburants, essences, gazoles, et les hydrocarbures synthétiques.

Par corps gras, liquides à température ambiante, on entend, de manière non limitative, les triglycérides, les huiles végétales ou animales, les graisses et les acides gras peu ou pas hydrosolubles.

S'agissant de ces hydrocarbures ou corps gras liquides à température ambiante, on entend par liquide, non seulement un état parfaitement fluide mais également des états plus pâteux, mais ayant une tendance spontanée à s'étaler sur une surface solide ou aquatique.

D'une façon générale cette matière à solidifier a une densité inférieure à 1, lui permettant de flotter sur l'eau le cas échéant, mais cette densité peut être supérieure si la matière est directement accessible à la composition telle que décrite ici.

Par mise sous forme solide de cette matière on entend la formation d'un matériau complexe contenant ladite matière, telle qu'un hydrocarbure ou un corps gras, et au moins le suif, ce matériau solide complexe étant apte à être appréhendé ou ramassé et ainsi à être totalement séparable de la surface solide ou aquatique sur laquelle se trouvait ladite matière, sauf éventuellement pour la portion de matière qui aurait pu être absorbée ou autrement soustraite dans le cas où ladite matière se serait trouvée sur une surface solide mais poreuse ou fissurée ou autrement imprégnable. Le procédé peut même être mis en œuvre sur des matériaux meubles, lorsqu'ils sont saturés.

Lorsque la composition utilisée contient un agent lubrifiant, notamment de nature huileuse, on peut prévoir, de manière préférée, que cet agent soit également retenu par le matériau complexe, permettant ainsi son élimination de la surface traitée lors de l'enlèvement dudit matériau complexe.

Dans un perfectionnement préféré de l'invention, une fois le matériau complexe solide enlevé, on peut le chauffer à une température égale ou supérieure au point de fusion du suif de la composition telle que décrite ici, puis séparer, de préférence par simple décantation, le suif d'avec les hydrocarbures ou corps gras, et éventuellement l'agent lubrifiant huileux. Pour cette séparation on peut procéder par simple soustraction des liquides qui se superposent, ou bien abaisser la température pour rendre solide ledit matériau solide à température ambiante et évacuer la ou les phases restées liquide.

En variante, notamment lorsque les densités de l'hydrocarbure et du suif sont très proches, on peut procéder à cette séparation par simple pressage ou centrifugation dudit matériau complexe chauffé.

De façon particulièrement préférée dans ce mode de réalisation, on chauffe le matériau complexe solide recueilli à une température de ramollissement du matériau, inférieure à la température de fusion du suif, de préférence à une température de 30 à 38°C, plus préférentiellement de l'ordre de 37°C, et l'on sépare l'hydrocarbure ou corps gras liquide, par pressage contre un filtre ou par centrifugation.

Lors du pressage, l'hydrocarbure ou corps gras traverse le filtre qui retient le suif ramolli. De préférence le filtre présente un maillage fin, inférieur à 1 mm. Il peut être avantageusement composé d'un treillage métallique très fin, ou d'une nappe de textile tissé, par exemple en lin, reposant sur un treillage de renfort.

Lors de la centrifugation, de préférence à axe de rotation vertical, le suif ramolli a tendance à se presser contre la paroi d'une cuve de centrifugation, l'hydrocarbure ou corps gras liquide s'écoulant vers le bas, par gravité, dans l'espace central libéré par le suif. Une rotation de 300 à 500 tr/min (rpm) est suffisante.

Le suif récupéré présente alors une teneur résiduelle en hydrocarbure ou corps gras, qui peut être inférieure à 1%, et même à 0,5%.

On peut ensuite réutiliser le suif, pour fabriquer une nouvelle quantité de composition telle que décrite ici, qui peut être à nouveau mise en œuvre dans le procédé selon l'invention.

La matière récupérée, à savoir les hydrocarbures ou corps gras, peut également, le cas échéant, être réutilisée.

L'invention a également pour objet l'application du procédé de mise en forme solide à la dépollution de sites terrestres ou aquatiques recouverts d'une nappe plus ou moins liquide continue ou fragmentée, d'hydrocarbure ou de corps gras.

Dans un tel procédé de dépollution on déverse sur la nappe une quantité de composition telle que décrite ici, chauffée à l'état liquide, on recueille la formation solide obtenue, et, optionnellement, on sépare par chauffage au moins le suif, d'avec les hydrocarbures ou corps gras provenant de la nappe.

De préférence, si la nappe est importante, on réutilise le suif pour fabriquer, de préférence sur place, une nouvelle quantité de composition, que l'on réutilise pour poursuivre la dépollution.

On décrit également un mode de mise en œuvre dans lequel on déverse sur la matière à solidifier, par exemple une nappe d'hydrocarbure ou corps gras à solidifier, une quantité de composition en excès, à savoir nettement, voire plusieurs fois supérieure à la quantité minimale nécessaire pour solidifier une quantité de matière à solidifier , on recueille le mélange solide formé, on chauffe ce mélange pour le rendre liquide et l'on déverse le mélange traité sur une autre quantité de matière à solidifier , on recueille le nouveau mélange solide formé, et optionnellement on renouvelle une ou plusieurs fois cette opération si le mélange dernièrement formé reste capable, une fois chauffé et déversé, de solidifier une nouvelle quantité de matière à solidifier.

On peut ainsi réutiliser une ou plusieurs fois la composition, mélangée à de l'hydrocarbure ou du corps gras polluant et assurer un enlèvement sensiblement complet du polluant.

Ce mode de mise en œuvre est particulièrement utile si l'on veut traiter des nappes de faible épaisseur ou de surface importante de pollution d'hydrocarbures ou corps gras, notamment en continu. On déverse alors sur une première surface de la nappe ladite quantité en excès, on recueille la masse solide formée, que l'on rend liquide et déverse sur une autre surface, de préférence adjacente de la nappe, et le cas échéant on renouvelle une ou plusieurs fois l'opération.

De préférence on utilise une quantité entre 2 et 10 fois en excès, plus préférentiellement au moins 4 fois en excès, de façon à traiter consécutivement 2 à 10 surfaces de nappe.

On procède, de préférence, à un déversement par épandage, de préférence par aspersion ou pulvérisation, de façon à amener la composition en contact avec la nappe en un grand nombre de points, typiquement peu écartés, ou même sur la continuité de la surface traitée.

De préférence on procède à l'aspersion par des buses à une hauteur variant entre 15 cm et 1m, notamment entre 30 et 60 cm.

La pression d'éjection peut être avantageusement de l'ordre de 2 à 6 bar.

Lorsque, comme cela est particulièrement préféré, on procède à l'étape de préparation de la matière à solidifier, le déversement d'acide peut être effectué, de préférence sous forme de jets minces et puissants, à une pression, par exemple de l'ordre de 2 à 6 bar, par exemple à une hauteur de à 15 cm à 1 m. Si l'on utilise des jets d'air comprimé, on préfère les envoyer à une pression, par exemple de l'ordre de 4 à 12 bar, par exemple à une hauteur comprise entre 15 cm à 1 m. Il est ainsi possible de solidifier, puis de recueillir, des nappes pouvant avoir une épaisseur de plusieurs centimètres, voire de 10 ou davantage.

On peut aussi mettre en œuvre le procédé de dépollution selon l'invention sur des nappes sur lesquelles on a déjà déversé un matériau agglomérant ou absorbant, par exemple, tel que de la tourbe sèche, mais on préfère généralement mettre en œuvre le procédé sur les nappes sans autre matériau.

On procède au recueil de la nappe solidifiée, de préférence en continu avec l'étape de solidification. En mer ou sur une surface aquatique on peut avantageusement utiliser des filets et/ou des moyens de ramassage par exemple, des godets ou des tapis roulants inclinés, dont l'extrémité inférieure est immergée. Il est préférable, comme cela est pratiqué, de circonscrire la nappe par la mise en place de boudins flottants. Sur une surface terrestre des moyens de recueil usuels, par exemple pelle mécanique, ou bulldozers, peuvent être utilisés.

Dans un perfectionnement du procédé de dépollution, notamment pour les nappes de grande surface, on peut procéder, en continu, à la mise en forme solide de ladite matière d'hydrocarbures ou de corps gras sensiblement liquide par déversement de ladite composition, au recueil dudit matériau complexe solide ainsi formé, à la séparation par chauffage, au moins du suif, d'avec les hydrocarbures ou corps gras recueillis, à la refabrication de ladite composition liquide à partir dudit matériau séparé, puis au déversement de ladite composition refabriquée.

Dans le cas, préféré, où on réutilise plusieurs fois de suite, la composition, en excès, pour solidifier des quantités ou surfaces successives d'hydrocarbures ou corps gras, on procède à ladite étape de séparation sur la composition, qui peut présenter, à la fin, une teneur importante, par exemple de 10%, voire saturante, par exemple de 20 à 30%, d'hydrocarbures ou corps gras.

De plus l'efficacité de la séparation augmente avec la teneur en hydrocarbures ou corps gras et l'on peut se dispenser d'effectuer une séparation sensiblement totale du suif d'avec ces polluants, que l'on peut conserver dans la solution jusqu'à une proportion ne dépassant pas, de préférence, de 0,5 à 2%.

L'invention a également pour objet des dispositifs et leur utilisation permettant la mise en œuvre du procédé selon l'invention et de ses applications.

Elle a notamment pour objet d'une part un dispositif et d'autre part son utilisation, pour la mise en œuvre du procédé de mise en forme solide d'hydrocarbures ou de corps gras sous forme sensiblement liquide selon l'invention, caractérisé en ce qu'il comprend un récipient pouvant contenir un volume de composition telle que décrite ici, à l'état liquide, des moyens de déversement de cette composition, et des moyens pour son transfert depuis ledit récipient vers lesdits moyens de déversement.

Dans une forme de réalisation avantageuse ledit récipient peut comporter lui-même des moyens de fabrication de ladite composition à l'état liquide. Ces moyens peuvent notamment comprendre des moyens de chauffage du contenu dudit récipient, et de préférence, des moyens d'agitation, notamment pour mélanger le suif fondu avec un liquide lubrifiant, et/ou pour assurer une homogénéisation de la composition.

De préférence les moyens de déversement comportent au moins une buse permettant de faire gicler ou asperger la composition liquide sur une zone de contact avec la matière à solidifier. De préférence lesdits moyens comportent une pluralité de buses disposées sur une rampe d'épandage.

Lesdits moyens de transfert de la composition peuvent comporter un ou plusieurs tubes ou conduits souple ou rigides, s'étendant entre ledit réservoir et lesdits moyens de déversement, et des moyens, tels que, par exemple, des moyens de pompage, ou des moyens de mise sous pression de réservoir, pour transférer, sous pression, la dite composition liquide.

On préfère particulièrement maintenir, en permanence, lesdits moyens de transfert à une température à laquelle la composition reste bien fluide, et l'on préfère aussi que les moyens de déversement, par exemple, les buses, soient chauffés.

De préférence le réservoir est calorifugé, par exemple, par une gaine isolante périphérique. Les moyens de chauffage du réservoir sont, de préférence, extérieurs au réservoir, et constitués, par exemple, par une gaine chauffante, avantageusement sous la gaine isolante. On peut aussi utiliser, par exemple, des récipients à double parois, entre lesquelles on peut chauffer ou faire circuler de l'huile pour assurer le chauffage et le maintien à température pendant une longue période.

La chaleur de la cuve ou réservoir peut, de préférence, assurer elle-même le maintien en température des moyens de pompage et des moyens d'agitation.

Le maintien en température des moyens des tubes ou canalisations est, de préférence, assuré par des cordons chauffants fixés sur eux, de préférence, dans une gaine isolante des tubes.

Le maintien en température des buses peut être assuré, par exemple, par de colliers chauffants qui les entourent.

Dans la forme de réalisation préférée, dans laquelle on met en œuvre une étape de préparation de la matière à solidifier à l'aide d'un acide, le dispositif comporte également un réservoir pour cet acide, des moyens de déversement et des moyens de transfert pour délivrer l'acide sous pression. De préférence, ces moyens de déversement comportent alors une ou plusieurs buses. Ces moyens sont réglables en position par rapport à la rampe de buses pour la composition et/ou, de préférence et, en hauteur par rapport à la surface à traiter de préférence solidarisés.

Par exemple, ces buses pour l'acide peuvent être fixées sur une rampe solidarisable à la rampe de déversement de la composition, les deux rampes étant alors disposées de façon que la zone d'aspersion d'acide précède de peu la zone de déversement de composition, de sorte que, lors de l'avance du dispositif, la composition se déverse immédiatement sur la matière liquide qui vient d'être aspergée par l'acide.

Il en est de même si l'action de l'acide est remplacée par des jets d'air comprimé. L'invention a également pour objet un dispositif selon la revendication 11, pour la mise en œuvre du mode perfectionné dans lequel, après solidification de la matière, on procède à la récupération du suif de la composition par chauffage, ce dispositif étant caractérisé en ce qu'il comporte une cuve recevant l'ensemble complexe solidifié de matière et de suif, des moyens de chauffage de cet ensemble pour former des phases liquides séparées superposées de matière telle qu'un hydrocarbure ou un corps gras, et de suif, optionnellement des moyens de refroidissement, si l'on désire solidifier ledit matériau, et des moyens de transfert séparés pour les deux volumes superposés.

Dans une autre forme de réalisation ce dispositif peut comporter, au lieu d'une cuve de décantation, une centrifugeuse permettant de séparer le matériau tel que le suif d'avec la ou les autres phases. La centrifugeuse peut être de type centrifugeuse à disques, par exemple, produite par la société Alfa Laval.. Elle peut aussi être réalisée sous une forme simple, avec une cuve cylindrique ou de révolution verticale, entrainable en rotation, présentant, au centre de sa paroi inférieure, un orifice d'évacuation, éventuellement avec un moyen ou vanne d'obturation, ladite cuve étant associée à des moyens de chauffage à la température de ramollissement du suif.

Dans une autre forme de réalisation, encore, ce dispositif peut comporter un dispositif de pressage, comprenant un récipient ou cuve, recevant le matériau complexe recueilli, associé à des moyens de chauffage à la température de ramollissement du suif, avec un moyen de mise sous pression de l'intérieur du récipient, l'une des parois du récipient, de préférence la paroi inférieure présentant un filtre fin, adapté à contenir le suif ramolli sous pression tout en laissant passer l'hydrocarbure ou corps gras liquide.

Le dispositif pour la mise en oeuvre du procédé de mise en forme solide d'hydrocarbures ou de corps gras sous forme sensiblement liquide selon l'invention, peut être de taille réduite, pour être transporté par un opérateur, mais il est préférable, du moins pour les pollutions plus importantes, qu'il soit monté sur un véhicule adéquat pouvant être amené directement sur le site à dépolluer.

Ce véhicule peut être par exemple un camion, une remorque, ou un véhicule tout terrain, ou une embarcation, par exemple, un ponton monté sur des flotteurs ou un navire, de préférence à au moins deux coques, l'ensemble formé par le dispositif et le véhicule pouvant ou non comporter des moyens de ramassage du solide produit par sa mise en œuvre, et/ou des moyens de stockage pour évacuer ensuite le solide ramassé.

De façon avantageuse un tel ensemble peut comporter des récipients supplémentaires de réserve de composition.

Dans le cas de pollutions très importantes, voire majeures, notamment aquatiques, on peut prévoir que le même véhicule, par exemple un navire, porte également le dispositif de récupération du matériau de la composition, ce dernier étant ainsi immédiatement récupéré et remis en œuvre, tandis que le polluant liquide séparé est stocké ou enlevé.

On peut même prévoir un ensemble fonctionnant en continu, dans lequel le matériau de graisse animale est réintroduit immédiatement dans le dispositif de mise en œuvre du procédé selon l'invention.

D'une façon générale, il est préférable, de circonscrire les nappes, avant dépollution, notamment sur des surfaces aquatiques, par des boudins de confinement usuels.

D'autres avantages et caractéristiques de l'invention apparaîtront à la lecture de la description suivante, faite à titre d'exemple non limitatif, et se référant au dessin annexé, dans lequel :
La Figure 1 représente une vue schématique de la cuve d'un récipient de fabrication d'une composition telle que décrite ici, et de ses éléments de chauffage séparés.
La Figure 2 représente une vue schématique de cette cuve avec ses éléments de chauffage assemblés.
La Figure 3 représente une vue schématique de la partie formant couvercle de cette cuve.
La Figure 4 représente une vue schématique du récipient formé par la cuve avec son couvercle.
La Figure 5 représente une vue schématique du récipient, unie d'une conduite souple de transfert, et d'une rampe de déversement séparée.
La Figure 6 représente une vue schématique d'une enveloppe de calorifugeage du récipient.
La Figure 7 représente une vue schématique d'un couvercle supérieur avec des moyens de commande.
La Figure 8 représente une vue schématique de l'ensemble calorifugé.
La Figure 9 représente une vue schématique d'une buse de déversement de la composition.
La Figure 10 représente une vue schématique d'une rampe de buses.
La Figure 11 représente une vue schématique d'une rampe de buses avec une autre hauteur et un autre angle d'épandage.
La Figure 12 représente une vue schématique d'un dispositif associé de préparation par jet d'acide.
La Figure 13 représente une vue schématique de profil d'une rampe de déversement de composition avec flotteur.
La Figure 14 représente une vue schématique en perspective de cette rampe faisant partie d'un ensemble de dépollution d'une nappe d'hydrocarbure sur un site aquatique.
La Figure 15 représente une vue schématique d'une cuve d'un dispositif de récupération du matériau de la composition.
La Figure 16 représente une vue schématique d'un couvercle pour cette cuve de récupération.
La Figure 17 représente une vue schématique d'un récipient pour l'utilisation de volumes importants de composition telle que décrite ici,
La Figure 18 représente une vue schématique d'un filet de ramassage d'un dispositif selon l'invention.
La Figure 19 représente une vue schématique de profil d'un ensemble perfectionné de dépollution en continu d'une nappe d'hydrocarbure de grande surface sur un site aquatique
La Figure 20 représente une vue schématique de dessus de cet ensemble.
La Figure 21 représente une vue schématique en perspective d'un dispositif de récupération par pressage de composition telle que décrite ici,
La Figure 22 représente une vue schématique éclatée d'un dispositif de récupération par centrifugation,
La Figure 23 représente une vue schématique de ce dispositif monté.

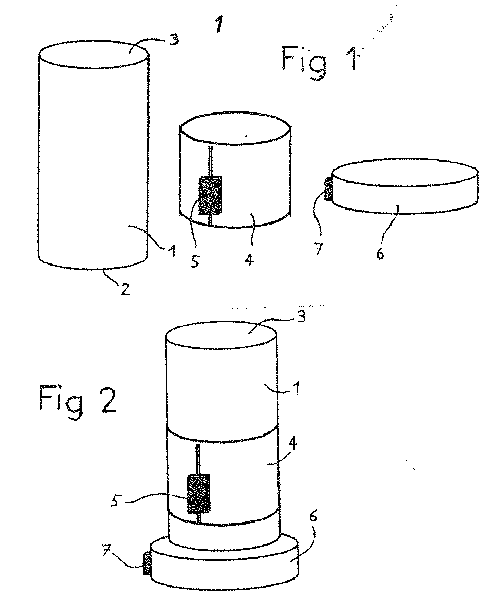

En se référant aux Figures 1 et 2, on voit que le dispositif comporte une cuve 1, de préférence métallique, de forme cylindrique, avec un fond 2 et une ouverture supérieure 3. Pour chauffer un volume de suif placé dans la cuve 1, on entoure celle-ci, vers sa partie inférieure, d'une ceinture chauffante électrique 4, d'un type usuel, avec un boitier d'alimentation électrique 5 comportant également un thermostat. La cuve 1 est placée sur un support de fond 6, également chauffant, avec son boitier 7 d'alimentation et son thermostat. Des moyens (non représentés) peuvent assurer la fixation sur le fond. Pour des dispositifs de taille importante notamment, on peut prévoir avantageusement un chauffage au gaz, de façon à être autonome, mais toute autre forme de chauffage autonome peut convenir.

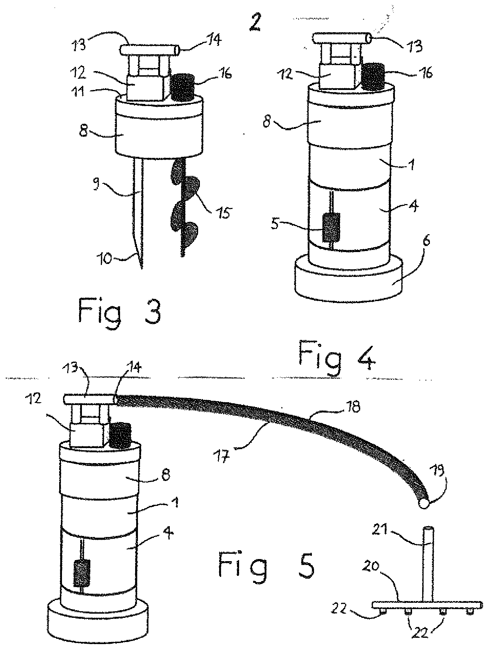

Sur les Figures 3 et 4, on voit un couvercle 8 de forme cylindrique qui peut être glissé sur la partie supérieure de la cuve 1 de façon étanche. Ce couvercle 8 présente un tube d'acier 9, biseauté à son extrémité inférieure 10, et qui traverse la partie supérieure plane 11 du couvercle 8 pour aboutir à une pompe 12, qui y est fixée, et dont émerge une tubulure de refoulement 13 présentant une extrémité de raccordement 14.

Le couvercle 8 porte également un agitateur hélicoïdal 15, s'étendant vers le bas, parallèlement au tube 9, et qui est entrainé par un moteur 16, également fixé sur la partie supérieure 11 du couvercle. De préférence le moteur 16 entraine l'agitateur par l'intermédiaire d'un embrayage, non représenté, pour un découplage mécanique si la composition se trouve dans un état solide ou trop visqueux.

Comme on le voit sur la figure 5, la sortie de raccordement 14 reçoit un tube ou conduit souple 17, résistant à la pression, et le long duquel s'étend un câble chauffant 18, pouvant être relié à une source électrique pour assurer le chauffage du tube 17. On peut aussi entourer l'ensemble formé par de tube 17 et le câble chauffant 18 par une gaine souple calorifugée, non représentée.

A l'autre extrémité 19 du tube 17, on raccorde une rampe tubulaire de déversement 20, présentant un conduit 21 de raccordement au tube souple 17, perpendiculaire à la rampe elle-même. La rampe tubulaire 20 présente une pluralité de buses de déversement équidistantes 22, adaptées au déversement de la composition liquide chaude. De préférence, la rampe 20, et éventuellement son conduit central 21, comportent également un câble ou cordon de chauffage électrique, non représenté, et peuvent, éventuellement être entourés d'une gaine calorifugée, également non représentée.

Enfin les buses 22 sont aussi entourées de moyens de chauffage, de préférences des colliers chauffants.

Tous ces éléments chauffants électriques, ceintures, cordons, et colliers, sont de type usuel, disponibles dans le commerce.

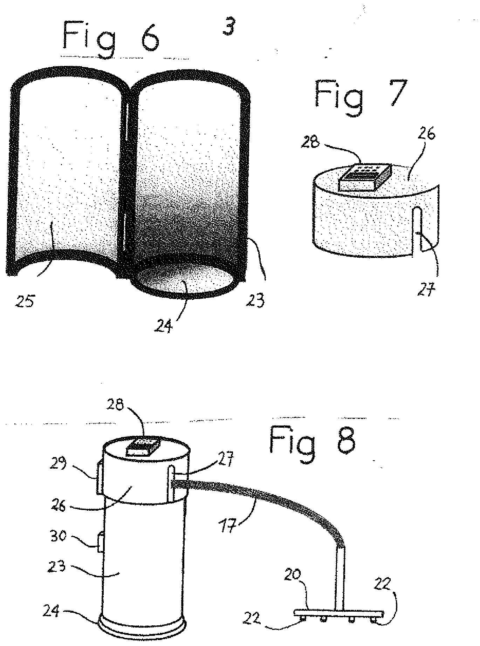

En se référant aux figures 6 à 8, on voit une enveloppe de calorifugeage 23 avec un fond 24 et une partie semi-cylindrique ouvrante 25 articulée. Une fois le récipient, formé par la cuve 1, son couvercle et ses différents composants, placé dans l'enceinte 23, celle-ci est recouverte, à sa partie supérieure, par un couvercle calorifugé 26, de forme cylindrique, avec une fente 27 pour le passage de la conduite de transfert 17, ce couvercle surmontant les éléments portés par le couvercle 8, tel que la pompe 12, le conduit 13 et le moteur d'agitateur 16.

De préférence le couvercle de calorifugeage 26 porte un boitier de commande 28, pour la pompe et l'agitateur, ce boitier pouvant être connecté, de façon amovible, par des câbles et des connecteurs, non représentés, à des moyens de connexion correspondants portés par le couvercle d'enceinte 8. Le couvercle 26 peut également comporter un connecteur d'alimentation électrique 29, qui peut être relié, de façon amovible à des moyens de connexion électrique portés par le couvercle 8, non représentés, pour alimenter la pompe 12, le moteur 16, et d'éventuelles électrovannes, non représentées pour le transfert de la composition liquide.

De préférence, l'enceinte 23 peut également comporter un connecteur d'alimentation électrique 30, raccordable de façon amovible, aux boitiers 5 de ceinture chauffante et 7 de fond chauffant. Le cas échéant ce connecteur 30 peut former un boitier comprenant les moyens de commande du chauffage.

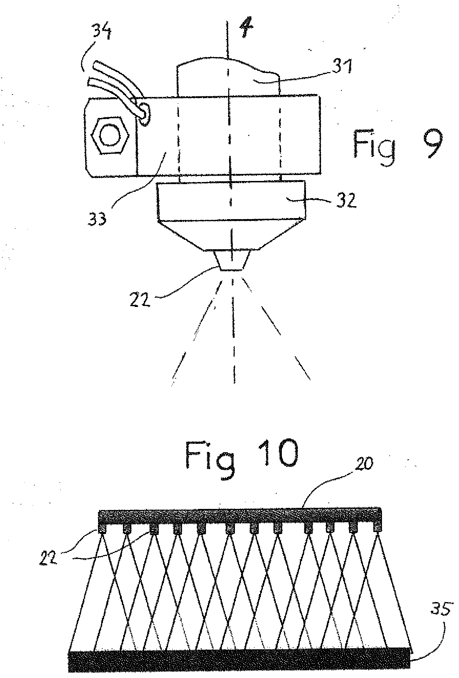

En se référant à la figure 9 on voit une buse 22 à jet plat, d'un type usuel dans le commerce, avec, sur le corps de buse 31, une partie vissée 32, permettant, par rotation, le réglage de l'angle d'épandage. Un collier chauffant 33, fixé autour de la buse, et alimenté en courant électrique par un câble 34, permet de maintenir la buse à la température désirée.

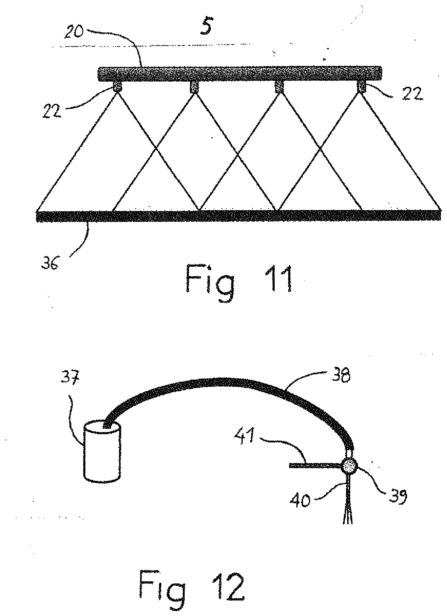

On se réfère maintenant aux figures 10 et 11. Sur la figure 10 on voit une rampe 20 formée d'un tube métallique présentant une pluralité de buses 22 orientées vers le bas et situées tous les 20 à 60 cm, par exemple 30 cm. Pour la solidification d'une nappe épaisse d'hydrocarbure 35 de grande épaisseur, par exemple de 0,5 à 60, voire 100 mm, on a réalisé des buses 22 à jet plat ayant un angle d'épandage compris entre 15 et 30° alimentées en composition liquide chaude, à une pression comprise entre 3 et 6 bar, les angles d'épandage se recouvrant au niveau de l'impact sur la nappe 35. La rampe 20 est portée par un ou des supports de hauteur réglable solidaires d'un véhicule ou embarcation, de façon à positionner la rampe à une hauteur de 30 à 100 cm au-dessus de la nappe 35.

Pour la solidification d'une nappe 36 moins épaisse, par exemple de quelques dixièmes de mm à 1 cm, on a représenté, sur la figure 11, une rampe 20 présentant des buses 22 avec un angle de pulvérisation de l'ordre de 80°, ces angles se recoupant au niveau de la nappe 36. La rampe peut avantageusement être située à une hauteur de 30 à 50 cm au-dessus de la nappe.

En se référant à la figure 12, on voit un dispositif de préparation de la nappe par aspersion d'acide citrique, comprenant un réservoir 37 d'acide citrique non chauffé, muni d'une pompe de transfert, ou préférentiellement d'un compresseur pneumatique, non représentés, permettant de transférer l'acide sous pression, par une conduit souple 38, vers une rampe 39, vue de profil, et présentant une pluralité de buses 40, permettant d'envoyer, vers le bas, des jets très fins d'acide. Ces buses sont, par exemple, situées à des intervalles de 15 à 30 cm, et sont alimentées à une pression comprise, par exemple, entre 3 et 6 bar. La rampe 39 est solidaire, par une des moyens de fixation 41, de la rampe 20, et est réglable en hauteur, indépendamment de la rampe 20, par exemple à une hauteur allant de 15 cm à 1 m. De plus la rampe d'acide est, de préférence, également réglable pour être écartée de la rampe 20 vers l'avant, d'une distance allant, par exemple, de 30 à 60 cm.

Ainsi la rampe 39, parallèle à la rampe 20, peut projeter sur la nappe polluante un rideau de jets très fins d'acide, perforant la nappe, qui est ainsi préparée pour recevoir, immédiatement après, l'aspersion ou la pulvérisation de composition liquide chaude telle que décrite ici.

En variante, la rampe 39 peut être remplacée par une rampe d'air comprimé envoyant vers le bas des jets très fins pouvant perforer la nappe d'hydrocarbure.

Les rampes 20, et leurs rampes 39 associées peuvent avoir des longueurs différentes, allant d'une dizaine de cm, pour des dispositifs de solidification portatifs de petite taille, jusqu'à 6 ou 10 m pour les pollutions de grande ampleur. On peut aussi prévoir des dispositifs portables n'ayant qu'une seule buse pour la composition, précédée, à courte distance d'une buse d'acide.

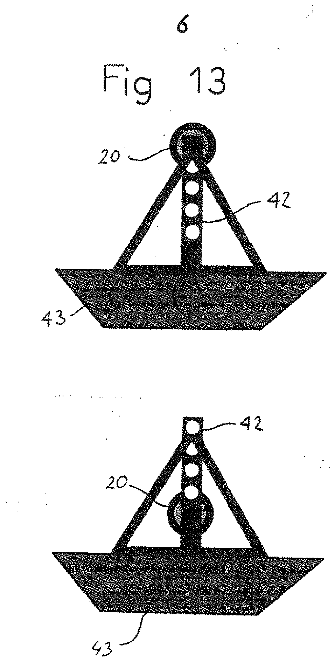

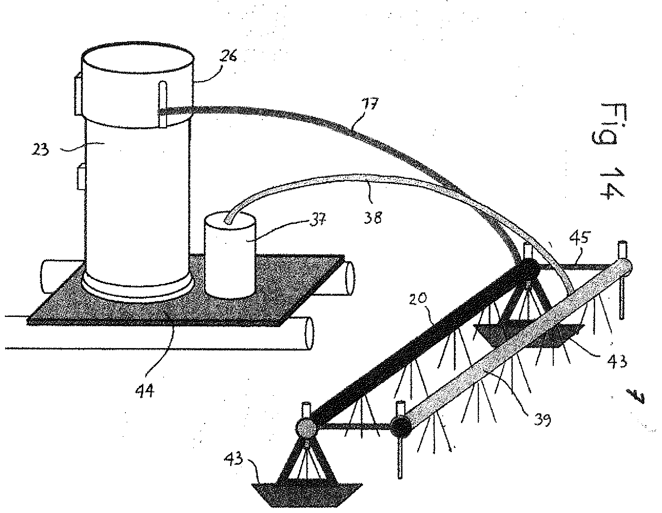

On a représenté, sur les figures 13 et 14, une rampe 20 de grande longueur, par exemple 4 m, formée d'un tube métallique obturé aux deux extrémités et présentant le long de son arête inférieure, une pluralité de buses équidistantes, ce tube portant un cordon chauffant et, de préférence, une gaine calorifugée, laissant dépasser les buses. A ces deux extrémités, la rampe 20 est portée, à une hauteur réglable, par des supports, par exemple des bras verticaux 42, eux-mêmes fixés sur des flotteurs correspondants 43.

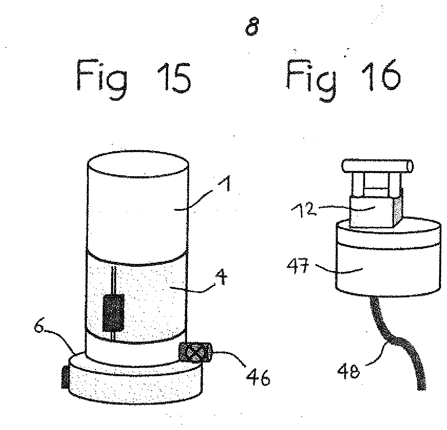

Cet ensemble est fixé devant la partie antérieure d'une embarcation 44, représentée sur les figures 15 et 16, qui porte le dispositif de préparation de la composition chaude liquide, avec son calorifugeage 23, 26 et qui est reliée au centre du tube, par une conduite 17, chauffée et calorifugée. Les flotteurs 43 peuvent aussi porter, à l'aide de bras 45 et dans une position avancée par rapport à la rampe 20, une rampe de projection d'acide 39, avec une pluralité de buses fines, la hauteur de cette rampe pouvant, de préférence, être réglée, indépendamment de celle de la rampe 20, et à une distance, par exemple de 30 à 60 cm devant cette dernière, dans le sens de déplacement de l'embarcation 44, qui pousse cet ensemble flottant, par exemple par l'intermédiaire de bras articulés reliant les flotteurs 43 à l'embarcation. La rampe 39 est reliée par le conduit 38, au dispositif d'alimentation en acide sous pression 37. Cette rampe 39 peut être décalée en arrière de la rampe 20, lorsque l'embarcation se déplace en direction opposée arrière.

Il n'est pas indispensable que les rampes soient portées par des flotteurs propres, mais ces derniers ont l'avantage de garantir une hauteur de déversement constante.

On se réfère aux figures 15 et 16. La récupération du suif, et du liquide polluant solidifié peut être mise en œuvre dans une cuve chauffée, ce qui rend liquide les différentes matières qui décantent et forment des couches superposées, non miscibles. Le polluant, tel qu'hydrocarbure ou corps gras liquide forme une couche supérieure, reposant sur la couche de matériau de suif solide à température ambiante, cette couche pouvant, le cas échéant reposer sur une mince couche d'eau, qui aurait pu provenir du ramassage de l'ensemble solide formé par le procédé selon l'invention. Ces couches peuvent être ensuite séparées, par exemple par de simples étapes d'aspiration. On préfère cependant laisser la cuve se refroidir, pour que ledit matériau, tel que le suif, se solidifie, puis on évacue la couche liquide sus-jacente de polluant pour récupérer ensuite le matériau sous forme solide.

De façon avantageuse, on peut utiliser des éléments identiques à ceux utilisés pour la fabrication de la composition liquide, par exemple une cuve 1, avec ses éléments chauffants 4 et 6. La cuve peut aussi présenter un robinet d'évacuation 46 à sa partie inférieure, en cas de formation d'une mince couche d'eau. La cuve peut être fermée par un couvercle 47 analogue au couvercle 8, pourvu ou non de l'agitateur 15 et de son moteur 16 relié par un embrayage, le tube 9 étant, pour sa part, remplacé par un tube souple 48 pour aspirer et évacuer le polluant.

De préférence le dispositif comporte également des moyens de refroidissement, ce qui permet alors de solidifier rapidement le matériau tel que le suif, une fois décanté, et ainsi faciliter encore la séparation. On peut, par exemple, prévoir d'entourer la cuve 1 par des ceintures chauffantes et refroidissantes alternées, ou bien par des serpentins chauds et froids entrelacés, avec une source de froid prévue, par exemple dans l'embase 6.

Le matériau redevenu solide peut ensuite être évacué, mais il est de loin préférable de l'utiliser pour un nouveau cycle de dépollution, en remplaçant, le cas échéant, le couvercle 47 par un couvercle 8, puis en calorifugeant le récipient, pour à nouveau rendre le matériau de la composition liquide, au besoin après ajout du produit lubrifiant.

Lorsque le procédé selon l'invention est appliqué à la dépollution d'une nappe sur une surface aquatique, par exemple fluviale, lacustre ou maritime, le recueil ou ramassage de la matière complexe solidifiée, qui flotte à la surface, peut être effectué par tout moyen adéquat, par exemple un filet. Le maillage de ce filet est de préférence assez fin pour récupérer l'essentiel de la matière solidifiée, tout en permettant un bon écoulement de l'eau, de façon à recueillir un matériau sensiblement dépourvu d'eau. De préférence le maillage est compris entre 4 et 10 mm, par exemple 5 mm.

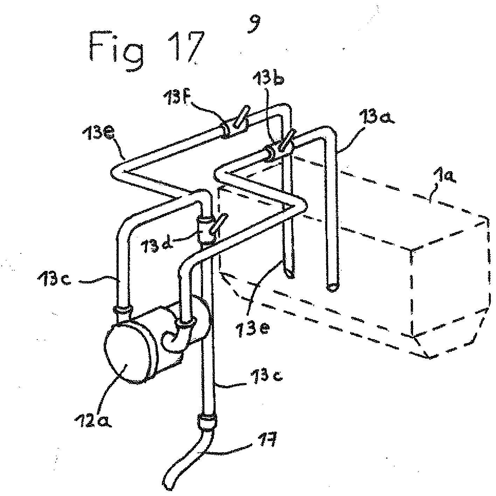

On se réfère à la Figure 17. Afin de simplifier le dispositif selon l'invention il peut être avantageux de ne pas utiliser un agitateur. La cuve chauffante 1a destinée à chauffer la composition reçoit un tube d'aspiration 13a muni d'une vanne 13b et aboutissant à l'aspiration d'une pompe 12a, dont le refoulement délivre la composition à un tube de refoulement 13c muni d'une vanne 13d permettant le transfert de la composition chaude sous pression au conduit 17 alimentant la rampe de buses. Une dérivation 13e, munie d'une vanne 13f, permet, en alternative, de refouler la composition dans la cuve 1a, et, en conséquence d'homogénéiser la composition pendant sa préparation et son stockage.

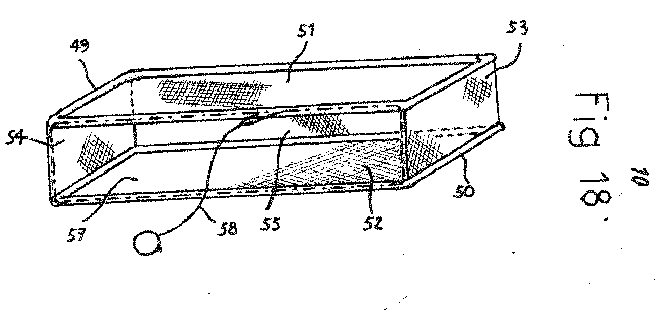

En se référant à la Figure 18 on voit un exemple de filet préféré comportant un boudin rectangulaire 49, rempli d'air, relié à un boudin inférieur similaire 50, mais rempli d'eau. La surface rectangulaire intérieure à chaque boudin présente une nappe de filet 51, 52, les deux boudins étant en outre reliés sur trois côtés du rectangle, par des parois de filet correspondantes, 53, 54, 55, le dernier grand coté formant la face d'ouverture 57 du filet. Un câble ou cordage 58 peut être prévu pour refermer l'ouverture du filet rempli à la fin de ramassage, les boudins étant alors vidés de leur air, respectivement de leur eau, à la suite de quoi le filet peut être hissé hors de l'eau pour être vidé dans une cuve. Ce câble peut, par exemple, être guidé le long des tronçons antérieurs des boudins 49 et 50, voire le long des bords antérieurs des côtés de filet 52, 53, par exemple, par des passants. Le filet fermé et qui reste flottant peut aussi être laissé sur place pour être ensuite récupéré par une autre embarcation.

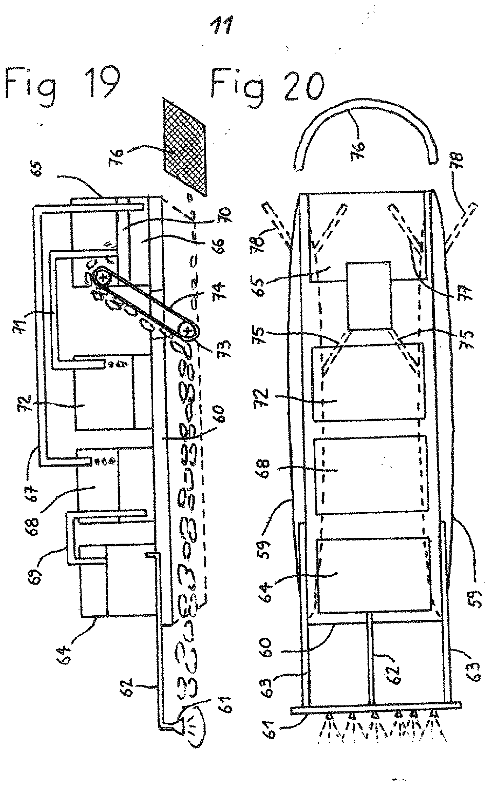

En se référant aux figures 19 et 20 on va maintenant décrire un dispositif pour la mise en œuvre du procédé pour une nappe d'hydrocarbure de grande ou très grande surface, en milieu aquatique, dans lequel on procède, en continu, à la mise en forme solide de la nappe, au recueil du matériau complexe solide ainsi formé, à la séparation du suif solide à température ambiante, d'avec l'hydrocarbure, à la refabrication de ladite composition à partir dudit matériau séparé, puis au déversement de ladite composition refabriquée, ainsi qu'au stockage ou à l'évacuation de l'hydrocarbure liquide.

L'ensemble comporte une embarcation à deux coques ou flotteurs 59 reliés par un pont 60, du type catamaran, les coques étant écartées d'une distance de 6 m, par exemple, l'embarcation comportant des moyens moteurs entrainant une ou des hélices immergées en profondeur pour ne pas influer sensiblement sur la nappe, les moyens de gouverne et de navigation usuels, et un groupe électrogène. Cette embarcation porte, à l'avant du pont 60, les deux rampes 20 et 39 représentées sur la figure 14, avec leurs flotteurs, réglées aux hauteurs voulues tenant compte de la nature et de l'épaisseur de la nappe, représentées dans leur ensemble sous la référence 61 et alimentées par leurs conduits respectifs, désignés dans leur ensemble sous la référence 62. Ces rampes sont reliées au pont 60 par deux bras articulés 63.

Le pont 60 porte un dispositif 64 de fabrication de la composition chauffée liquide, par exemple du type décrit aux Figures 1 à 8, ou 17, pour alimenter la rampe de déversement 20, ainsi qu'un dispositif, non représenté, d'alimentation de la rampe 39, incorporant un récipient d'acide citrique de grand volume.

Le pont porte également un dispositif 65 de récupération du matériau de graisse animale, à savoir le suif, et du liquide polluant solidifié, par exemple du type représenté sur les Figures 15 et 16, ce dispositif pouvant extraire le suif, de préférence sous forme encore liquide, depuis la couche 66, pour le transférer, de préférence périodiquement, par une conduite 67, à une cuve intermédiaire chauffée 68, alimentant, de préférence périodiquement, le dispositif 64 en matériau déjà liquide, par une conduite 69. La couche d'hydrocarbure 70, pour sa part, est évacuée par un conduit 71, vers une cuve ou récipient d'hydrocarbure 72.

Les mottes ou agrégats solides de matériau complexe formés par le déversement de la composition telle que décrite ici, et qui flottent entre les deux coques de l'embarcation sont recueillies par des moyens de ramassage 73, qui les déversent dans la cuve du dispositif de récupération 65. Ces moyens de ramassage peuvent être divers, par exemple une chaîne à godets, dont les godets, non représentés, présentent un fond grillagé pour laisser s'évacuer, pendant la montée, l'eau recueillie avec le matériau tout en retenant ce dernier, ou même, simplement, un tapis roulant 74 incliné selon un angle assez faible, de préférence grillagé, éventuellement muni, à intervalles réguliers, de traverses de retenue, ou bien possédant simplement, à sa surface externe une rugosité suffisante empêchant les plus grosses mottes ou fragments de rouler vers le bas, l'extrémité inférieure du tapis étant immergée pour recevoir le matériau complexe solidifié.

Ces moyens de ramassage peuvent s'étendre sur toute la distance du pont entre les deux flotteurs, mais on peut aussi utiliser un dispositif de ramassage beaucoup moins large, situé, de préférence, au milieu du pont 59, en prévoyant deux déflecteurs 75 partiellement immergés convergeant au milieu et vers l'arrière, pour guider la nappe solidifiée vers le dispositif de ramassage 73, à la manière d'un entonnoir.

On peut également prévoir, à l'arrière de l'embarcation, de ramasser, avec un filet 76, par exemple, du type décrit sur la Figure 18, les fragments résiduels, qui n'ont pas été ramassés par le dispositif de recueil 73. Deux déflecteurs 77 peuvent être prévus pour centrer ces fragments vers le filet 76.

Enfin ou peut aussi prévoir deux déflecteurs latéraux externes 78 peuvent aussi être prévus pour garantir que les parties non traitées de la nappe polluante et adjacentes aux bords latéraux externes des flotteurs ne se dirigent vers le filet 76.

L'embarcation comporte également des moyens moteurs, avec une ou des hélices immergées à plusieurs mètres de profondeur, des moyens de gouverne, des moyens d'alimentation, de préférence électriques pour entrainer les différents dispositifs mobiles, notamment les pompes des circuits, les moyens d'agitation, le dispositif de ramassage, et d'une façon générale tous accessoires utiles. Pour le chauffage des cuves il est préférable d'utiliser des moyens de chauffage au gaz.

On peut ainsi, avec une quantité raisonnable de matériau, à savoir le suif, traiter des nappes, s'étendant sur des surfaces considérables, dans le cas de pollutions majeures. On pourra alors préférer assurer l'étape de préparation de la nappe par des jets d'air comprimé, et/ou des lames mécaniques, pour éviter une consommation trop élevée d'acide, sachant que pour les pollutions d'hydrocarbures assez fluides, ou peu épaisses, on pourra déverser la composition telle que décrite ici, directement sans préparation de la nappe. La quantité de composition à déverser sur la nappe peut être généralement de 0,05 à 0,25 litre de composition pour 1 mètre carré de nappe dans le cas d'une pollution d'une surface aqueuse, telle que rivière, étang ou mer.

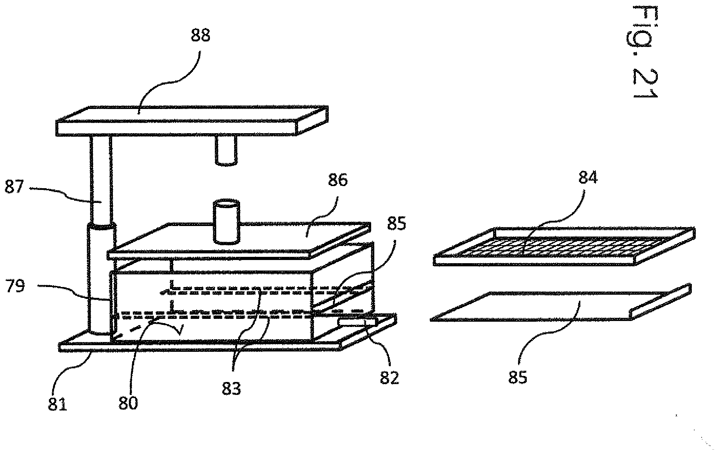

On se réfère à la Figure 21. Celle-ci montre un dispositif de récupération de suif par pressage du matériau complexe de suif et d'hydrocarbure solidifié recueilli. Il comporte une cuve parallélépipédique 79 en matériau résistant, par exemple en acier, dont le fond 80 repose sur une embase 81, et dont la face supérieure est ouverte. La cuve 79 est munie, au niveau du fond, d'un conduit de vidange 82 possédant une vanne (non représentée). Les deux grandes faces verticales de la cuve présentent, sur leur côté interne, deux nervures 83 parallèles au fond. Ces nervures peuvent soutenir le cadre d'un filtre en treillis métallique 84 très fin, que l'on glisse, par une ouverture latérale 85, sur les nervures 83. De préférence, un plateau d'étanchéité 85 peut être glissé sous le filtre 84, ce plateau pouvant aussi être retiré lorsque le filtre est en place dans la cuve 79. Un plateau de compression 86 peut être introduit dans la cuve par sa face supérieure ouverte, et s'y mouvoir vers le bas, de façon étanche grâce à des garnitures d'étanchéité (non représentés) disposés sur ses quatre bords. L'embase porte un dispositif moteur 87, par exemple un vérin, portant un bras 88 permettant de repousser le plateau de compression 86 vers le bas.

Le filtre 84 étant mis en place dans la cuve 79, avec le plateau d'étanchéité sous-jacent, on introduit dans la cuve, au-dessus du filtre, une masse de matériau solide complexe de suif et d'hydrocarbure, on amène le plateau de compression 86 dans la cuve au-dessus de cette masse, et on chauffe la masse jusqu'à le température de ramollissement, par exemple 37°C. On retire le plateau 85 et on actionne le vérin 87 qui repousse le plateau 87 vers le bas sous forte pression. On constate que l'hydrocarbure s'écoule progressivement à travers le filtre dans le bas de la cuve 79, d'où il peut être soutiré par le conduit 82. A la fin de la compression il reste, au-dessus du filtre 84, un gâteau de suif contenant moine de 1% d'hydrocarbure. On retire ce gâteau, soit mécaniquement, soit en chauffant la cuve au-dessus de 48°C, ce qui rend le suif liquide et permet de le soutirer, par exemple, par passage à travers le filtres 84 puis sortie par le conduit 82. Le suif ainsi récupéré peut être réutilisé pour solidifier et recueillir une nouvelle quantité de polluant hydrocarbure ou corps gras.

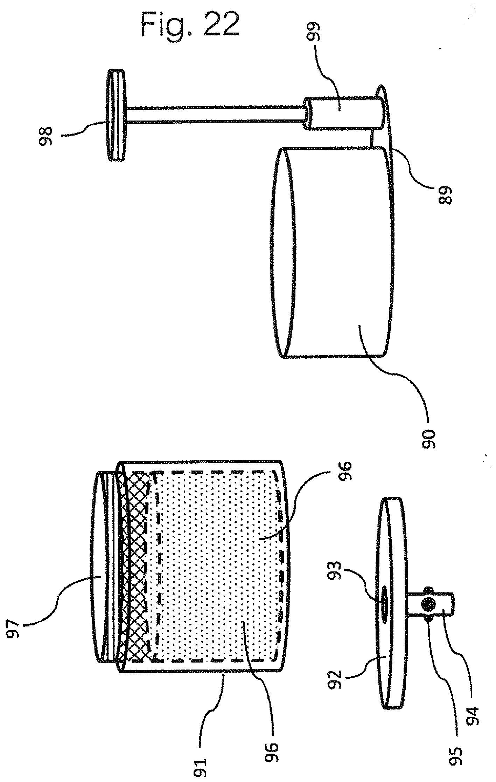

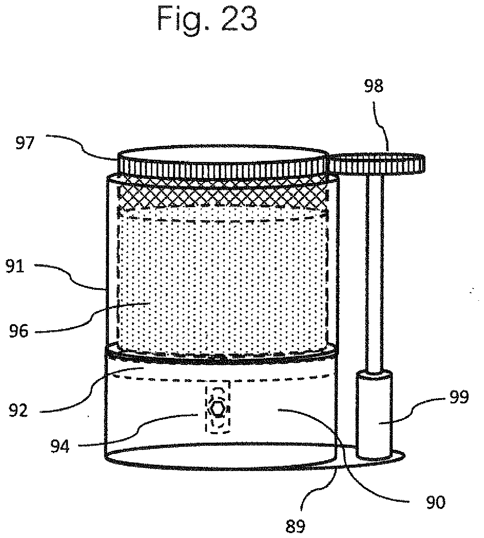

En se référant aux Figures 22 et 23 on voit une centrifugeuse pour la récupération d'une composition de suif telle que décrite ici. Elle comporte, sur une embase 89, une cuve cylindrique inférieure fixe 90 sur laquelle on peut venir disposer une cuve cylindrique fixe supérieure 91, dont le fond est constitué d'un plateau circulaire amovible 92 muni d'un passage central 93 se prolongeant par un court conduit central 94 muni d'une vanne de vidange 95. Le dispositif comporte un rotor 96 formant un panier cylindrique, de préférence troué par des perforations multiples aussi bien dans son fond que dans sa surface cylindrique. Ce rotor peut tourner dans la cuve 91 autour de l'axe vertical commun de l'ensemble en étant guidé, de façon usuelle, par des roulements à billes (non représentés) interposés entre le fond du rotor et la face supérieure du plateau 92. Sur le sommet du rotor 96 est fixé, de façon amovible, un disque denté 97 engrenant avec une roue dentée 98 entrainée par un ensemble moteur 99 solidaire de l'embase 89.

On introduit dans le rotor 96 une masse de matériau complexe solide, on fixe le disque denté 97 sur le rotor et on place le rotor dans la cuve 96 fixée sur le plateau 92. On chauffe alors la masse jusqu'au point de ramollissement, entre 30 et 38°C, puis on fait tourner le rotor dans la cuve, par exemple à 300 rpm, tout en ouvrant la vanne 95. On constate que la masse de matériau dans le rotor 96 se trouve appliquée contre la face interne de la paroi cylindrique du rotor, voire traverse le rotor vers la paroi cylindrique interne de la cuve 91, ouvrant un volume libre central dans le rotor, tandis que l'hydrocarbure s'extrait de la masse et s'écoule centralement vers le bas, à travers les perforations centrales du fond du rotor, puis le conduit 94, pour être récupéré dans la cuve inférieure 90 d'où il peut être soutiré, par un conduit non représenté. A la fin de la centrifugation, on trouve dans le rotor et la cuve 91, la masse de suif récupérée, contenant une faible teneur en hydrocarbure. On récupère cette masse soit mécaniquement, soit, de préférence par chauffage de l'ensemble au-dessus de la température de fusion du suif, permettant de recevoir le suif liquide dans la cuve de fond 90, après qu'elle ait été vidée de l'hydrocarbure.

A titre d'exemple, les procédés de filtration sous pression et de centrifugation ont chacun permis de récupérer le suif avec moins de 1% de polluant, à partir de matériaux comprenant de l'huile de vidange de densité 0,855, du lait de densité 1,050 ou du gazole de densité 0,850.

## Revendications

1. Procédé de dépollution d'un site, par mise en forme solide d'hydrocarbures ou de corps gras, qui sont liquides à température ambiante, et qui sont en nappe sur le site, la nappe d'hydrocarbures ou de corps gras liquides formant une matière à solidifier, **caractérisé en ce que** :
- l'on chauffe une composition comprenant, au moins en proportion majoritaire en volume par rapport à la composition totale, du suif de bovin ou d'ovin, et optionnellement, un agent fluidifiant, à une température d'au moins 45°C notamment de 45 à 55°C pour que la composition soit à l'état liquide ;
- on met en contact la composition avec la matière à solidifier, en déversant la composition sur la matière à solidifier alors que ladite composition est à l'état liquide, pour ainsi obtenir un matériau complexe solide contenant les hydrocarbures ou corps gras de la matière à solidifier ; et
- l'on recueille ce matériau complexe solide.

2. Procédé selon la revendication 1, dans lequel on procède, immédiatement avant ladite mise en contact, à une étape de préparation de la matière à solidifier pour améliorer la distribution de ladite composition dans la matière à solidifier, ladite étape de préparation comprenant :
- une aspersion de la matière à solidifier par un acide, notamment un acide organique à chaîne courte, notamment l'acide citrique, ou l'acide acétique, le volume d'acide aspergé étant préférentiellement inférieur ou égal à 10 %, du volume total de composition utilisée, notamment à 2 à 4 ou 5 %, et/ou
- l'envoi d'un jet de gaz comprimé, notamment d'air comprimé sur la matière à solidifier, et/ou
- une dissociation mécanique de ladite matière à solidifier,
ladite étape de préparation étant mise en œuvre dans une zone qui est située à courte distance, de préférence de 5 cm à 1 m, notamment entre 15 et 50 cm, devant la zone où est effectuée la mise en contact de la matière à solidifier avec la composition.

3. Procédé selon l'une des revendications 1 et 2, **caractérisé en ce que** le suif de la composition est du suif de bœuf ou de mouton, et **en ce que** l'agent fluidifiant comprend une huile, notamment une huile minérale, la proportion d'agent fluidifiant étant inférieure ou égale à 5 % en poids.

4. Procédé selon la revendication 3, **caractérisée en ce que** la proportion en volume de suif, par rapport à la composition totale, est d'au moins 75 %, et notamment d'au moins 90 %.

5. Procédé selon l'une des revendications 1 à 4, **caractérisé en ce que** l'on chauffe le matériau complexe recueilli à une température égale ou supérieure au point de fusion du suif, puis on sépare ledit suif du matériau complexe en vue de fabriquer une nouvelle quantité de composition.

6. Procédé selon l'une des revendications 1 à 4, **caractérisé en ce que** l'on chauffe le matériau complexe recueilli à une température de ramollissement du suif dans le matériau complexe, puis on soumet le matériau complexe à une étape de pressage contre un filtre ou de centrifugation pour séparer l'hydrocarbure ou corps gras liquide d'avec le suif ramolli.

7. Procédé selon la revendication 6, **caractérisé en ce que** ladite température de ramollissement est de 30 à 38°C, notamment 37°C.

8. Procédé selon l'une des revendications précédentes **caractérisé en ce que** on déverse la composition sur la matière à solidifier de façon à amener la composition en contact avec la nappe en un grand nombre de points, ou même sur la continuité de la surface traitée de la nappe.

9. Procédé selon la revendication 8 **caractérisé en ce que** l'on déverse une quantité de composition allant de 0,05 à 1 litre, notamment de 0,05 à 0,25 litre par mètre carré de nappe d'hydrocarbure ou de corps gras.

10. Procédé selon l'une des revendications 5 à 7, **caractérisé en ce que** l'on procède, en continu, à la mise en forme solide de ladite matière à solidifier par déversement de ladite composition, recueil dudit matériau complexe solide ainsi formé, séparation, au moins, du suif d'avec les hydrocarbures ou corps gras recueillis, à la refabrication de ladite composition à partir dudit suif séparé, puis au déversement de ladite composition refabriquée.

11. Dispositif pour la mise en œuvre du procédé selon l'une des revendications 1 à 10, **caractérisé en ce qu'**il comprend une embarcation avec deux flotteurs (59) reliés par un pont (60), ladite embarcation portant entre lesdits flotteurs, des moyens déversement (20, 22) de ladite composition, avec au moins une rampe portant une pluralité de buses de rampe (61), et à l'arrière des moyens de recueil (73, 74), alimentant un dispositif (65) de récupération du matériau complexe solide à température ambiante, un récipient (1, 8) pouvant contenir un volume de ladite composition à l'état liquide, et des moyens (12, 17) pour son transfert sous pression depuis ledit récipient vers lesdits moyens de déversement, et optionnellement des moyens de chauffage (4,6), et/ou des moyens d'agitation (15,16) du contenu dudit récipient.

12. Dispositif selon la revendication 11 **caractérisé en ce qu'**il comprend une pluralité de fines buses (40) de déversement d'acide présentées sur une rampe (39) solidarisable à une rampe de déversement de la composition, les deux rampes étant alors disposées de façon que la zone d'aspersion d'acide précède de peu la zone de déversement de composition, de sorte que lors de l'avance du dispositif la composition se déverse immédiatement sur la matière liquide qui vient d'être aspergée par l'acide, et/ou des moyens pour l'envoi de jets d'air comprimé disposés de façon que la zone d'impact des jets précède de peu la zone de déversement de composition, de sorte que lors de l'avance du dispositif la composition se déverse immédiatement sur la matière liquide qui vient de recevoir lesdits jets.

13. Dispositif selon l'une des revendications 11 et 12, **caractérisé en ce qu'**il comporte également un dispositif de récupération du suif en vue de fabriquer à nouveau ladite composition, comprenant des moyens de séparation par chauffage et décantation, ou des moyens de pressage à une température de ramollissement du suif, ou des moyens de centrifugation à une température de ramollissement du suif.

14. Dispositif selon l'une des revendications 11 à 13, **caractérisé en ce qu'**il comporte des moyens de ramassage comportant un filet présentant un boudin supérieur (49) susceptible d'être rempli d'air, et un boudin inférieur (50) susceptible d'être rempli d'eau, et reliés entre eux par des parois de filet, en laissant une ouverture antérieure, des moyens de filin coulissant (58) pouvant être prévus pour refermer cette ouverture.

## Patentansprüche

1. Verfahren zum Entgiften einer Stelle durch feste Formgebung von Kohlenwasserstoffen oder Fettstoffen, die bei Umgebungstemperatur flüssig sind und die in Form einer Schicht auf der Stelle vorliegen, wobei die Schicht aus Kohlenwasserstoffen oder Fettstoffen ein zu verfestigendes Material bildet, **dadurch gekennzeichnet dass**
- man eine Zusammensetzung, die zumindest in einem Großteil des Volumenanteils, bezogen auf die Gesamtzusammensetzung, Rinder- oder Schafstalg und gegebenenfalls ein Fluidisierungsmittel enthält, auf einerTemperatur von mindestens 45 ° C, insbesondere von 45 bis 55°C erwärmt, so dass sich die Zusammensetzung im flüssigen Zustand befindet,
- man die Zusammensetzung mit dem zu verfestigenden Material in Kontakt bringt, indem die Zusammensetzung auf das zu verfestigende Material gegossen wird, während sich die Zusammensetzung im flüssigen Zustand befindet, um dadurch ein festes komplexes Material zu erhalten, das die Kohlenwasserstoffe oder Fettsubstanzen des zu verfestigenden Materials enthält,
- man dieses feste komplexe Material sammelt

2. Verfahren nach Anspruch 1, bei dem unmittelbar vor dem Inkontaktbringen ein Schritt zur Herstellung des zu verfestigenden Materials durchgeführt wird, um die Verteilung der Zusammensetzung im Material zu verbessern, wobei dieser Herstellungsschritt
- Besprühen des zu verfestigenden Materials mit einer Säure, insbesondere einer kurzkettigen organischen Säure, insbesondere Zitronensäure oder Essigsäure, wobei das verschüttete Säurevolumen vorzugsweise kleiner oder gleich 10% des Gesamtvolumens der verwendeten Zusammensetzung ist, insbesondere 2 bis 4 oder 5%, und/oder
- Senden eines Druckgasstrahls, insbesondere Druckluft, auf das zu verfestigende Material und/oder
- mechanische Dissoziation des zu verfestigenden flüssigen Materialsumfasst, wobei der Herstellungsschritt in einer Zone mit kurzem Abstand, vorzugsweise von 5 cm bis 1 m, insbesondere zwischen 15 und 50 cm, vor der Zone in welcher das Material in flüssiger Form mit der Zusammensetzung in Kontakt kommt,
durchgeführt wird.

3. Verfahren nach einem der Ansprüche 1 und 2, **dadurch gekennzeichnet dass** der Talg der Komposition Rind- oder Schafltalg ist, und das Fluidisierungsmittel ein Öl, insbesondere ein Mineralöl, umfasst, wobei der Anteil des Fluidisierungsmittels 5 Gew .-% oder weniger beträgt

4. Verfahren nach Anspruch 3, **dadurch gekennzeichnet, daß** der Volumenanteil von Talg bezogen auf die Gesamtzusammensetzung mindestens 75% und insbesondere mindestens 90% beträgt.

5. Verfahren nach einem der Ansprüche 1 bis 4, **dadurch gekennzeichnet, dass** das gesammelte komplexe Material auf eine Temperatur erwärmt wird, die gleich oder höher als der Schmelzpunkt des Talgs der Zusammensetzung ist, und der Talg dann von dem komplexen Material getrennt wird, um eine neue Menge der Zusammensetzung herzustellen.

6. Verfahren nach einem der Ansprüche 1 bis 4, **dadurch gekennzeichnet, dass** das gesammelte komplexe Material auf eine Erweichungstemperatur von Talg in dem komplexen Material erwärmt wird, und dann das komplexe Material einem Pressschritt gegen einen Filter oder einem Zentrifugationsschritt unterzogen wird, um den flüssige Kohlenwasserstoff oder Fettstoff von dem erweichten Talg abzutrennen.

7. Verfahren nach Anspruch 6, **dadurch gekennzeichnet, dass** die Erweichungstemperatur 30 bis 38°C, insbesondere 37°C beträgt.

8. Verfahren nach einem der vorhergehenden Ansprüche, **dadurch gekennzeichnet, dass** die Zusammensetzung auf das zu verfestigende Material gegossen wird, um die Zusammensetzung an einer großen Anzahl von Punkten oder sogar auf der Kontinuität der behandelten Oberfläche der Schicht in Kontakt zu bringen.

9. Verfahren nach Anspruch 8, **dadurch gekennzeichnet, dass** eine Menge der Zusammensetzung im Bereich von 0,05 bis 1 Liter, insbesondere von 0,05 bis 0,25 Liter pro Quadratmeter Kohlenwasserstoff- oder Fettstoffschicht gegossen wird.

10. Verfahren nach einem der Ansprüche 5 bis 7, **dadurch gekennzeichnet, daß** man kontinuierlich zur festen Formgebung des zu verfestigenden Materials durch Eingießen der Zusammensetzung, Sammeln des so gebildeten festen Komplexmaterials, Abtrennen mindenstens des Talgs von den gesammelten Kohlenwasserstoffen oder Fettstoffen, Wiederaufbereiten der Zusammensetzung aus dem getrennten Talg, und dann Gießen der wiederaufbereiteten Zusammensetzung, durchführt.

11. Vorrichtung zur Durchführung des Verfahrens nach einem der Ansprüche 1 bis 10, **dadurch gekennzeichnet, daß** sie ein Boot mit zwei Schwimmkörper (59) aufweist, die durch eine Brücke (60) verbunden sind, wobei das Boot zwischen den Schwimmkörpern Eingießenmittel (20, 22) für die Zusammensetzung trägt, die mindestens eine Rampe, die mehrere Düsen enthält, und hinten Sammelmittel (73, 74), die eine Vorrichtung (65) zur Rückgewinnung des unter Umgebungstemperatur festen Komplexmaterials liefern, einen Behälter (1, 8), der ein Volumen der Zusammensetzung im flüssigen Zustand enthalten kann, Mittel (12, 17) zur Übergabe unter Druck von dem Behälter zu den Eingießenmittel, und wahlweise Heizmittel (4, 6) und / oder Rührmittel (15, 16) für den Inhalt des Behälters, trägt.

12. Vorrichtung nach Anspruch 11, **dadurch gekennzeichnet, daß** sie mehrere feine Düsen (40) zum Ablassen von Säure, die auf einer Rampe (39) angeordnet sind, die mit einer Rampe zum Guss der Zusammensetzung verbunden werden kann, wobei die beiden Rampen dann so angeordnet sind dass die Säuresprühzone der Zusammensetzungsgießzone geringfügig vorausgeht, so dass die Zusammensetzung beim Vorschieben der Vorrichtung sofort auf das gerade mit der Säure besprühte flüssige Material gegossen wird, und / oder Mittel zum Senden von Druckluftstrahlen, die so angeordnet sind, dass die Strahlaufprallzone der Zusammensetzungsaustragszone geringfügig vorausgeht, so dass die Zusammensetzung beim Vorschieben der Vorrichtung auf dem flüssigen Material, das gerade die Strahlen erhalten hat, sofort gegossen wird, aufweist.

13. Vorrichtung nach einem der Ansprüche 11 oder 12, **dadurch gekennzeichnet, dass** sie auch eine Talggewinnungsvorrichtung zur erneuten Herstellung der Zusammensetzung umfasst, die Mittel zur Trennung durch Erhitzen und Dekantieren oder Pressmittel bei Talg-Erweichungstemperatur, oder Zentrifugationmittel bei Talg-Erweichungstemperatur, aufweist.

14. Vorrichtung nach einem der Ansprüche 11 bis 13, **dadurch gekennzeichnet, dass** sie Sammelmittel umfasst, die ein Netz mit einem oberen Rohr (49), das mit Luft gefüllt werden kann, und mit einem unteren Rohr (50) das mit Wasser gefüllt werden kann, die durch Netzwände miteinander verbunden sind, enthält, so das eine vordere Öffnung verbleibt, wobei Gleitseilmittel (58) vorgesehen werden können , um diese Öffnung zu verschließen.

## Claims

1. A process for the remediation of a site by converting to solid form hydrocarbons or fatty substances which are in liquid form at ambient temperature and constitute a slick on the site, which slick of hydrocarbons or fatty substances is a matter to be converted to solid form, **characterized in that**:
one heats a composition comprising bovine or ovine tallow at least in majority volume proportion with regard to the total composition and optionally a fluidizing agent to a temperature of at least 45°C in particular 45 to 55°C, whereby the composition is converted to liquid form ;
one contacts the composition with the matter to be converted to solid form, by pouring the composition while in liquid form to the matter to be converted to solid form, such obtaining a solid complex material which comprises the hydrocarbons or fatty substance of the matter to be converted to solid form, and
one recovers this complex material in solid form.

2. The process according to claim 1 wherein immediately before said contacting, a step to prepare the matter to be solidified is performed to improve the distribution of said composition within the matter, said step comprising :
sprinkling with an acid in particular a short-chain organic acid, in particular citric acid or acetic acid, the volume of poured acid preferably being 10 % or lower of the total volume of composition used, in particular 2 to 4 or 5 % and/or
jetting compressed gas, compressed air in particular, onto the matter to be solidified and/or
mechanical separation of said liquid matter to be solidified,
said preparation step being carried out in a zone at a short distance, preferably 5 cm to 1m and in particular between 15 and 50 cm, ahead of the zone in which the matter is contacted with the composition in liquid form.

3. The process according to one of claims 1 and 2, **characterized in that** the tallow of the composition is beef or sheep tallow, and the fluidizing agent comprises an oil, in particular a mineral oil, the fluidizing agent weight proportion being less or equal to 5%.

4. The process according to claim 3, **characterized in that** the volume proportion of tallow with regard to the total composition, is at least equal to 75%, in particular at least 90%.

5. The process according to one of claims 1 to 4, **characterized in that** said complex material is heated to a temperature equal to or higher than the melting point of the tallow, after which said tallow is separated from the complex material in order to prepare a new amount of composition.

6. The process according to one of claims 1 to 4, **characterized in that** said complex material is heated to softening temperature of the tallow in the complex material and the complex material is subjected to a pressing step against a filter or to a centrifugation step to separate the liquid hydrocarbon or fatty substance from the softened tallow.

7. The process according to claim 6, **characterized in that** said softening temperature is 30 to 38°C, particularly 37°C.

8. The process according to one of the preceeding claims, **characterized in that** the composition is poured to the matter to be converted to solid form to bring the composition in contact with the slick at a large number of points or even over the continuity of the treatedsurface of the slick

9. The process according to claim 8, **characterized in that** an amount of composition ranging from 0.05 to 1 litre, in particular 0.05 to 0.25 litre, is poured per slick square metre ofhydrocarbon or fatty substance.

10. The process according to one of claims 5 to 7, **characterized in that** the converting of said matter to solid form via pouring of said composition, collecting of said solid complex material thus formed, separation at least of the tallow from the collected hydrocarbons or fatty substances, remanufacture of said composition from said separated tallow and pouring of said remanufacturedcomposition are carried out continuously.

11. A device to implement the process according to one of claims 1 to 10, **characterized in that** it comprises a craft with two floats (59) linked by a bridge (60), said craft bearing, between said floats, means (20,22) to pour this composition, with at least one ramp carrying a plurality of ramp nozzles (61), and collection means (73, 74) at the rear feeding a device (65) for recovering the complex material being solid at ambient temperature, a tank (1,8) able to contain a volume of said composition in liquid state, and means (12, 17) for transfer thereof under pressure from said tank to said pouring means, and optionally heating means (4,6) and/or agitation means (15, 16) for the content of said tank.

12. The device according to claim 11, **characterized in that** it comprises a plurality of fine acid spray nozzles (40) on a ramp (39) which can be secured to a ramp to pour the composition, both ramps then being arranged with the acid sprinkling zone lying slightly ahead of the composition pour zone so that as the device travels the composition is immediately poured to the liquid matter which has just been sprinkled with acid, and/or means to jet compressed air being arranged so that the impact zone of the jets lies slightly ahead of the composition pour zone so that, as the device travels, the composition is immediately poured to the liquid matter that has just been jetted.

13. The device according to one of claims 11 and 12, **characterized in that** it also comprises a device to recover the tallow for remanufacture of said composition, comprising separation means via heating and decanting, or pressing means at tallow softening temperature, or centrifugation means at tallow softening temperature.

14. The device according to one of claims 11 to 13, **characterized in that** it comprises collection means comprising a net having an upper boom (49) able to be filled with air and a lower boom (50) able to be filled with water, and connected together by net walls leaving clear an anterior opening, pulling rope means (58) possibly being provided to close this opening.
